# EUROPEAN PATENT SPECIFICATION

(11) **EP 0 685 171 B1**
(45) Date of publication and mention of the grant of the patent: **03.04.2002**
(21) Application number: 95201387.8
(22) Date of filing: 26.05.1995
(51) Int. Cl.: A23L 1/187, A23C 9/154

(54) **Bake-stable custard**
Bakenstabile Custard
Flan stable à la cuisson

(30) Priority: 31.05.1994 EP 94201535
(43) Date of publication of application: 06.12.1995
(73) Proprietor: CSM Nederland B.V., 1112 XE Diemen (NL)
(72) Inventor: Hameleers-v. Bilsen, Danielle G.J.L., NL-3511 MZ Utrecht (NL); Scholtes, Jacobus L.H., NL-3043 PJ Rotterdam (NL); van Zon, Maria J.A., NL-3255 BN Oude Tonge (NL)
(74) Representative: Jorritsma, Ruurd

(56) References cited:
- WO-A-94/04037
- FR-A- 1 574 091
- GB-A- 2 261 805
- US-A- 3 666 497
- H.D.GRAHAM: 'Food Colloïds' , AVI , WESTPORT - USA Pages 355-357, 360, 361 * page 356, paragraph 2 - page 357, paragraph 2 * * page 360, paragraph 3 - page 361, paragraph 3 *

## Description

Although pasteurized custards are known that can be applied in bakery products, those products have a serious drawback; i.e. those custards are not bake-stable. Therefore those custards cannot be applied in bakery-products that still have to be baked. The main-problem is that the viscosity of the custards becomes too low upon heating which means that the custards will flow away during heating, resulting in uncacceptable end-products. When the viscosity is intermediate another problem still occurs, which is that upon baking, the custards boil over during heating. Moreover, the shelflife of pasteurized custards is not long enough to make them acceptable for retail products where a long shelf life normally is required. Another disadvantage of pasteurized products which are on the market now is the presence of food preservatives such as K-sorbate. This kind of preservatives is not always allowed in food products. Still other disadvantages of the prior art custards is the display of syneresis (water-separation), so that the products are unacceptable for the customer after a short storage-time.

We have now found a new type of bakery custards in which excellent organoleptic properties are combined with excellent storage properties and with excellent bake-stability.
So our invention concerns in the first place sterilized, bake-stable custard, comprising:
(a) up to 8 wt%, preferably 0.5-6 wt%, and more preferably 2-5 wt%, UHT-stable, modified starch;
(b) 0.01-10 wt%, preferably 0.5-5 wt% milk proteins;
(c) 0.05-6 wt%, preferably 0.1-3 wt% non-gelling thickener;
(d) 0.001-5 wt%, preferably 0.001-2.5 wt% of a salt that interacts with gelling gums;
(e) 0.1-20 wt%, preferably 0.1-10 wt% of a gelling thickener that gels under the influence of salt (d);
(f) 0 - 30 wt% of a sweetener;
(g) 0 - 5 wt% of flavours;
(h) 0 - 5 wt% of colorants;
(i) water and optionally other ingredients;
wherein the custard displays a loss modulus, G" at 90°C of at least 20 Pa.

As the rheology of our custards play an important role in the bake-stability, we prefer our custards to have a G" (i.e. loss modulus) of at least 30 Pa when measured at 90°C. For most applications of the bake stable custard of our invention, it is preferred that the bake stable custard has a G" of at least 40 Pa at 90°C. whereas for some particular applications a firm product is desired: for these applications, a G" above 75 Pa is preferred, in particular embodiments G" is preferably higher than 110 Pa at 90°C.

An important component in our custards is the UHT-stable modified starch. In fact UHT-stable modified starches are known components. In our WO 94/04037 (publ. 3.3.1994) we have disclosed the H- and R-groups of modified starches that are known and which are identical with classes E1422 and E1442 of the EEC-classification. Preferred starches are acetylated distarch adipate and hydroxypropyl distarch phosphate.

The milk-proteins that are present can be derived from butter milk powder, skim milk powder or from non-fat milk solids, although also other protein sources can be used. In addition, water and optionally other ingredients will be present. Such other ingredients suitably are the other components of the milk-protein source, such as lactose present in milk powder.

The non-gelling thickener is used to adjust the rheology, in particular the G" of our custards. Useful non-gelling thickeners can be selected form the group consisting of carrageenan, gelatin, guar gum, hydrolysed or depolymerized guar gum, galactomannan, hydrolysed galactomannan, xanthan gum, gum arabic, gum tragacanth, tara gum, agar, locust bean gum.
In order to achieve the correct rheology it is necessary that the products also contain a salt that interacts with the gelling gums. Examples of such salts are salts (organic or inorganic) of Na, K, Ca, Mg or mixtures thereof. Suitable salts are chlorides, carbonates, sulphates and the like. The selection of the salts to be applied will depend on the thickener applied. For example, in the case gellan gum is applied as the gelling thickener, any of these salts can be used. For alginate and/or low methoxy pectin, calcium and magnesium salts are usually to be applied.
A very suitable source for salts of calcium is the calcium present in milk-products.
The most preferred gelling thickeners are selected from the group consisting of alginate, low methoxy pectin and gellan gum, and mixtures thereof. The alginate preferably are alkali metal salts of alginate. A preferred low methoxy (= LM) pectin has a degree of esterification of 0-50%.

The other components (sweeteners, colorants, flavours) of our custards are the conventional products that do not contribute to the inventive concept.

Another ingredient that might be useful as an agent for a controlled salt-ion diffusion is formed by the group of sequestrants, such as polyphosphates, pyrophosphates, phosphates, etc.

In order to be able to make our custards, a specific process should be applied, as is has been found that the gelling thickeners and the salt that interacts with the gelling thickeners should not be present simultaneously when the phases, containing them, are subjected to a sterilization treatment. When both would be present simultaneously this could lead to a blocking of the production lines.
We found a new process, based on the use of a split-stream process that avoids the above problems, but still results in the required products.
Therefore, our invention also concerns a split-stream process for the preparation of a sterilized, bake-stable custard, wherein the custard has the composition as presently claimed by:
(1) making a premix (I) of the UHT-stable modified starch, the milk-proteins, the non-gelling thickeners, optionally the sweetener, flavour and colorant and the salt that interacts with gelling thickeners, in water;
(2) making a premix (II) of one or more of the gelling thickeners that gel under the influence of the gel-promoting salt and water which preferably is deionized or demineralized;
(3) subjecting the premixes (I) and (II) to independent sterilization treatments at 130-160°C during 0.1-30 sec.;
(4) combining the sterilized premixes (I) and (II) in a weight ration of 1:1 to 8:1 under aseptic conditions.

The water to be applied for making premix (II) can be tap-water in the case the water has a low hardness. This means that the amount of Ca and/or Mg ions present therein should be less than the amount at which a significant raise of viscosity of the gelling thickener in water is obtained.

The exact amount of these ions (the hardness of the water) depends on the type and amount of the gelling thickener used.

An alternative route can be applied if care is taken of there not being any free Na⁺, K⁺, Ca²⁺ and/or Mg²⁺ ions present in Premix (I). According to this alternative route in which case none of these ions may be present in this Premix (I), the gelling thickener can be present in this Premix (I). The second premix (Premix II) then will comprise water and at least one compound by which, upon the mixing of Premix I and II, free salt ions that interact with the gelling thickeners are present in the mixture of these two compositions. This can be obtained in various ways. In one suitable embodiment, any ions present in premix I of the main preparation route are being precipitated prior to the addition of the gelling thickener, e.g. by the addition of an anion (added as a water-soluble salt) that forms a water-insoluble compound with the ions that interact with the gelling thickener to be applied. The gelling thickener is added to this premix. Premix II will, in that case, comprise components which are capable of liberating the captured salt ions. E.g., this can be an acidic aqueous solution, or a solution comprising water-soluble salt ions.
In another suitable embodiment, Premix I does not comprise any salt components which can interact with the gelling thickeners. In that case, Premix I can comprise the gelling thickener. Premix II, in that case, will comprise the salt that interacts with the gelling thickener present in Premix I.

With these alternative routes, the premixes (I) and (II) are sterilized separately. Finally, the sterilized premixes (I) and (II) are combined aseptically.

In the above process all our ingredients as disclosed for our compositions can be applied.

### EXAMPLE I

A composition (I) was made by mixing of the following ingredients in the ratio indicated:

| | wt% |
|---|---|
| whey milk powder containing Ca-caseinate | 9.5 |
| sugar | 18.5 |
| gelatin | 1.8 |
| carrageenan | 0.12 |
| guar gum | 0.12 |
| UHT-stable mod. starch | 4.9 |
| water | 63.7 |
| | 100% |

A composition (II) was made by mixing of LM-pectin and deionised water in a 1:9 weight ratio. Both compositions were subjected separately to an UHT-treatment (6 sec to 150°C).

The two sterilized streams were combined under aseptic conditions, using a ratio of: 4 parts composition (I): 1 part of composition (II).
The resulting product displayed a G" of 94 Pa at 90°C, as measured by a dynamic measurement, as disclosed in: "Inleiding in de Rheologie by Blom C.S., 1991, Kluwer Techn. Boeken", using a Rheolab MC-100 and applying a frequency of 1 Herz and a stress (g) of 0.02.

### EXAMPLE II

A composition (I) was made by mixing of the following ingredients in the ratio indicated:

| | parts by weight |
|---|---|
| whole milk powder | 7.5 |
| CaCO₃ | 0.009 |
| sugar | 15 |
| gelatin (250 bloom) | 0.875 |
| carrageenan | 0.075 |
| hydrolysed guar gum | 0.075 |
| UHT-stable mod. starch (E1442) | 4.0 |
| colorants | 0.024 |
| vanilla flavour | 0.05 |
| water | 42.392 |

A composition (II) was made by mixing of 0.6 parts by weight of alginate and 29.4 parts by weight of water. Both compositions were subjected separately to an UHT-treatment. Composition I was treated for 55 seconds at 133°C, composition II was treated for about 12.5 seconds at 137°C. The two sterilized streams were combined under aseptic conditions, whereby the total amount of Composition I used was 70 wt%, and the total amount of Composition II was 30 wt% of the total amount of Compositions I and II together. The resulting product displayed a G" of 200 Pa at 90°C, and was thus a good bake-stable product. The product had good organoleptic properties and storage-stability.

### EXAMPLE III

A composition (I) was made by mixing of the following ingredients in the ratio indicated:

| | parts by weight |
|---|---|
| whole milk powder | 7.52 |
| Na₃PO₄∗12H₂O | 0.78 |
| sugar | 15.0 |
| gelatin (250 bloom) | 1.0 |
| alginate | 1.5 |
| UHT-stable mod. starch (E1442) | 4.0 |
| colorants | 0.025 |
| vanilla flavour | 0.025 |
| water | 65.15 |

A second composition (Composition II) was made by mixing 79.4 wt% of water with 20.6 wt% calcium sulphate dihydrate. The total amount of Composition I was 95 wt%, and the total amount of Composition II was 5 wt% of the total amount of Composition I and II together. Both compositions were subjected separately to an UHT-treatment. By treating Composition I for 55 seconds at 133°C, and Composition II for about 12.5 seconds at 137°C, and combining the two sterilized streams under aseptic conditions, a good tasting, reasonably firm custard is obtained which is bake-stable.

## Claims

1. Sterilized, bake-stable custard, comprising:
(a) 0.5 to 8 wt% UHT-stable, modified starch;
(b) 0.01 - 10 wt% milk proteins;
(c) 0.05 - 6 wt% of non-gelling thickener
(d) 0.001 - 5 wt% of a salt that interacts with gelling gums;
(e) 0.1 - 20 wt% of a gelling thickener that gels under the influence of salt (d)
(f) 0 - 30 wt% of a sweetener
(g) 0 - 5 wt% of flavours
(h) 0 - 5 wt% of colorants
(i) balance up to 100%: water and optionally other ingredients;
wherein the custard displays a loss modulus, G" at 90 °C of at least 20 Pa.

2. Sterilized, bake-stable custard according to claim 1 or 2, wherein the custard displays a loss modulus, G" at 90°C of at least 40 Pa.

3. Sterilized, bake-stable custard according to any one of claims 1 to 2, wherein the UHT-stable modified starch is selected from the R- or H-group modified starches, in particular actylated distarch adipate and hydroxypropyl distarch phosphate.

4. Sterilized, bake-stable custard, according to any one of claims 1-3 wherein the custard contains butter milk powder, skim milk powder or non-fat milk solids as a source of the milk proteins.

5. Sterilized, bake-stable custard, according to claims 1-4, wherein the non-gelling thickener is selected from the group, consisting of carrageenan, gelatin, guar gum, hydrolysed or depolymerized guar gum, galactomannan, hydrolysed galactomannan, xanthan gum, gum arabic, gum tragaconth, tara gum, agar, locust bean gum.

6. Sterilized, bake-stable custard according to claims 1-5, wherein the gel-promoting salt is selected from Ca-salts, Mg-salts, sodium salts or potassium salts, or mixtures thereof.

7. Sterilized, bake-stable custard according to claims 1-6, wherein the gelling thickener is selected from the group consisting of: alginate, low methoxy pectin and gellan gum.

8. Sterilized, bake-stable custard according to claim 7, wherein the LM-pectin has an degree of esterification of 0-50 %.

9. Split-stream process for the preparation of a sterilized, bake-stable custard, wherein the custard has the composition according to claims 1-8 by:
(1) making a premix (I) of the UHT-stable modified starch, the milk-proteins, the non-gelling thickeners, optionally the sweetener, flavour and colorant and the salt that interacts with gelling thickeners, in water;
(2) making a premix (II) of the gelling thickeners that gels under the influence of the gel-promoting salt and water which preferably is deionized and/or demineralized;
(3) subjecting the premixes (I) and (II) to independent sterilization treatments at 130-160°C during 0.1-30 sec.
(4) combining the sterilized premixes (I) and (II) in a weight ration of 1:1 to 8:1 under aseptic conditions.

## Patentansprüche

1. Sterilisierte, backstabile Puddingcreme enthaltend
(a) 0,5 bis 8 Gew.% UHT-stabile, modifizierte Stärke;
(b) 0,01-10 Gew.% Milchproteine;
(c) 0,05-6 Gew.% eines nichtgelierenden Verdickungsmittels;
(d) 0,001 -5 Gew.% eines Salzes, das auf Geliergummis einwirkt;
(e) 0,1-20 Gew.% eines gelierenden Verdickungsmittels, das unter dem Einfluß des Salzes (d) geliert;
(f) 0-30 Gew.% eines Süßstoffes;
(g) 0-5 Gew.% von Geschmacksstoffen;
(h) 0-5 Gew.% von Farbstoffen;
(i) Rest bis auf 100 %: Wasser und wahlweise andere Bestandteile;
wobei die Puddingcreme einen Verlustmodul G'' bei 90 °C von mindestens 20 Pa zeigt.

2. Sterilisierte, backstabile Puddingcreme nach Anspruch 1 oder 2, die einen Verlustmodul G'' bei 90 °C von mindestens 40 Pa zeigt.

3. Sterilisierte, backstabile Puddingcreme nach einem der Ansprüche 1 bis 2, bei der die UHT-stabile, modifizierte Stärke aus den R- oder H-Gruppen-modifizierten Stärken ausgewählt ist, insbesondere acetyliertem Distärkeadipat und Hydroxypropyldistärkephosphat.

4. Sterilisierte, backstabile Puddingcreme nach einem der Ansprüche 1 bis 3, die Buttermilchpulver, Magermilchpulver oder fettfreie Milchfeststoffe als Quelle der Milchproteine enthält.

5. Sterilisierte, backstabile Puddingcreme nach den Ansprüchen 1 bis 4, bei der das nichtgelierende Verdickungsmittel aus der Gruppe ausgewählt ist, die aus Gallertmoos, Gelatine, Guargummi, hydrolisiertem oder depolymerisiertem Guargummi, Galactomannan, hydrolisiertem Galactomannan, Xanthangummi, Gummiarabicum, Tragantgummi, Taragummi, Agar, Johannisbrotgummi besteht.

6. Sterilisierte, backstabile Puddingcreme nach den Ansprüchen 1 bis 5, bei der das die Gelierung fördernde Salz aus Ca-Salzen, Mg-Salzen, Natriumsalzen oder Kaliumsalzen oder Gemischen hiervon ausgewählt ist.

7. Sterilisierte, backstabile Puddingcreme nach den Ansprüchen 1 bis 6, bei der das gelierende Verdickungsmittel aus der Gruppe ausgewählt ist, die aus Alginat, niedrigem Methoxypectin und Gellangummi besteht.

8. Sterilisierte, backstabile Puddingcreme nach Anspruch 7, bei der das LM-Pectin einen Veresterungsgrad von 0-50 % besitzt.

9. Split-Stream-Verfahren für die Herstellung einer sterilisierten, backstabilen Puddingcreme, bei dem die Puddingcreme die Zusammensetzung nach den Ansprüchen 1-8 aufweist, durch:
(1) Herstellen einer Vormischung (I) aus der UHT-stabilen, modifizierten Stärke, den Milchproteinen, den nichtgelierenden Verdickungsmitteln, wahlweise dem Süßstoff, Geschmacksstoff und Farbstoff und dem Salz, das auf gelierende Verdickungsmittel einwirkt, in Wasser;
(2) Herstellen einer Vormischung (II) der gelierenden Verdickungsmittel, die unter dem Einfluß des die Gelierung fördernden Salzes und Wasser, das vorzugsweise entionsiert und/oder entmineralisiert ist, gelieren;
(3) Durchführen von unabhängigen Sterilisationsbehandlungen der Vormischungen (I) und (II) bei 130-160 °C während 0,1-30 sec;
(4) Kombinieren der sterilisierten Vormischungen (I) und (II) in einem Gewichtsverhältnis von 1:1 bis 8:1 unter aseptischen Bedingungen.

## Revendications

1. Flan stable à la cuisson, stérilisé comprenant :
(a) de 0,5 à 8 % en poids d'amidon résistant à un traitement UHT,
(b) de 0,01 à 10 % en poids de protéines de lait,
(c) de 0,05 à 6 % en poids d'un agent épaississant non-gélifiant,
(d) de 0,001 à 5 % en poids d'un sel qui interagit avec des gommes gélifiantes,
(e) de 0,1 à 20 % en poids d'un agent épaississant gélifiant qui forme un gel en présence du sel (d),
(f) de 0 à 30 % en poids d'un agent sucrant,
(g) de 0 à 5 % en poids d'arômes,
(h) de 0 à 5 % en poids de colorants,
(i) la partie complémentaire jusqu'à 100 % étant formée par de l'eau et éventuellement d'autres ingrédients,
dans lequel le flan présente un module de perte G", à 90 °C, au moins égal à 20 Pa.

2. Flan stable à la cuisson, stérilisé selon la revendication 1 dans lequel le flan présente un module de perte G", à 90 °C, au moins égal à 40 Pa.

3. Flan stable à la cuisson, stérilisé selon l'une quelconque des revendications 1 ou 2, dans lequel l'amidon résistant à un traitement UHT est choisi parmi les amidons modifiés des classes R ou H, en particulier l'adipate de diamidon acétylé et le phosphate de diamidon hydroxypropylé.

4. Flan stable à la cuisson, stérilisé selon l'une quelconque des revendications 1 à 3, dans lequel le flan contient de la poudre de babeurre, de la poudre de lait écrémé ou des matières sèches de lait non-grasses en tant que source de protéines du lait.

5. Flan stable à la cuisson, stérilisé selon les revendications 1 à 4, dans lequel l'agent épaississant non-gélifiant est choisi dans le groupe formé par les carraghénanes, la gélatine, la gomme de guar, la gomme de guar hydrolysée ou dépolymérisée, les galactomannanes, les galactomannanes hydrolysés, la gomme xanthane, la gomme arabique, la gomme adragante, la gomme tara, l'agar-agar et la farine de graines de caroube.

6. Flan stable à la cuisson, stérilisé selon les revendications 1 à 5, dans lequel le sel déclenchant la gélification est choisi parmi les sels de calcium, les sels de magnésium, les sels de sodium ou les sels de potassium, ou des mélange de ceux-ci.

7. Flan stable à la cuisson, stérilisé selon les revendications 1 à 6, dans lequel l'épaississant gélifiant est choisi dans le groupe formé par les alginates, la pectine faiblement méthoxylée et la gomme gellane.

8. Flan stable à la cuisson, stérilisé selon la revendication 7, dans lequel la pectine faiblement méthoxylée a un taux d'estérification compris entre 0 et 50 %.

9. Procédé à chaîne divisée pour la préparation d'un flan stable à cuisson, stérilisé, dans lequel le flan a la composition selon l'une quelconque des revendications 1 à 8, comportant les étapes consistant
(1) à préparer un prémélange (I) contenant l'amidon modifié résistant au traitement UHT, les protéines de lait, les agents épaississants non-gélifiants, éventuellement un agent sucrant, des arômes et des colorants, ainsi que le sel qui interagit avec les agents épaississants gélifiants, dans de l'eau ;
(2) à préparer un prémélange (II) contenant les agents épaississants gélifiants qui forme un gel en présence du sel favorisant la gélification, et de l'eau qui est de préférence désionisée et/ou déminéralisée,
(3) à soumettre les prémélanges (I) et (II) indépendamment à un traitement de stérilisation à une température allant de 130 à 160 °C pendant une durée allant de 0,1 à 30 secondes,
(4) à combiner les prémélanges stérilisés (I) et (II), dans des conditions aseptiques, en un rapport en poids allant de 1:1 à 8:1.
